# EUROPÄISCHE PATENTSCHRIFT

(11) **EP 4 504 486 B1**
(45) Veröffentlichungstag und Bekanntmachung des Hinweises auf die Patenterteilung: **20.08.2025**
(21) Anmeldenummer: 23713575.1
(22) Anmeldetag: 17.03.2023
(51) Int. Cl.: B29C 48/691, B29C 48/27, B29C 48/25

(54) **SIEBRAD-FILTRIERVORRICHTUNG FÜR DIE HOCHDRUCKFILTRATION EINER KUNSTSTOFFSCHMELZE**
SCREEN WHEEL FILTER DEVICE FOR THE HIGH-PRESSURE FILTRATION OF A PLASTIC MELT
DISPOSITIF DE FILTRE À ROUE À TAMIS POUR LA FILTRATION HAUTE PRESSION D'UNE MASSE FONDUE DE MATIÈRE PLASTIQUE

(30) Priorität: 07.04.2022 DE 102022108498
(43) Veröffentlichungstag der Anmeldung: 12.02.2025
(73) Patentinhaber: Gneuss GmbH, 32549 Bad Oeynhausen (DE)
(72) Erfinder: GNEUSS, Stephan, 32547 Bad Oeynhausen (DE); GNEUSS, Daniel, Charlotte, NC 28277 (US); GNEUSS, Detlef, 6919 Carabietta (CH)
(74) Vertreter: Tarvenkorn, Oliver
(86) Internationale Anmeldenummer: PCT/DE2023/100209
(87) Internationale Veröffentlichungsnummer: WO 2023/193842

(56) Entgegenhaltungen:
- CN-A- 101 602 249
- US-B2- 8 202 423
- US-B2- 8 540 874

## Beschreibung

Die Erfindung betrifft eine Siebrad-Filtriervorrichtung für die Hochdruckfiltration einer Kunststoffschmelze, mit den Merkmalen des Oberbegriffs des Anspruchs 1.

Bei der Filterung von Kunststoffschmelzen müssen Agglomerate oder Feststoffpartikel ausgefiltert werden, bevor die Schmelze einer weiterverarbeitenden Anlage wie einer Extrusionseinrichtung mit Düse zugeführt werden kann. Um eine unterbrechungsfreie Produktion zu ermöglichen, sind verschiedene Bauarten von Filtriervorrichtungen bekannt, die den Austausch eines Filtersiebs im laufenden Betrieb erlauben, indem ein neues, nicht verunreinigtes Sieb in den Fließkanal gebracht und das verunreinigte daraus entfernt wird. Eine besondere Schwierigkeit bei der Filtration von Kunststoffschmelzen besteht darin, dass diese bei hohen Temperaturen und bei hohen Drücken erfolgen muss, die schon bei normalen Anwendungen zwischen 250 bar und 300 bar liegen.

Eine gattungsgemäße Filtriervorrichtung wurde grundlegend in der der DE 3302343 A1 und der EP 0 569 866 A1 beschrieben und wurde seitdem kontinuierlich verbessert. Sie ermöglicht die Filtration von Kunststoffschmelze und anderen mittel- bis hochviskosen Fluiden, wobei die Abgrenzung zu niedrigviskosen Medien durch die Bauweise bedingt ist, wie nachfolgend erläutert wird. Das Siebrad, das die einzelnen Siebelemente trägt, ist zwischen zwei Gehäuseplatten positioniert, die in einer bestimmten Distanz zueinander gehalten werden, damit das Siebrad einerseits noch drehbar ist und andererseits der Spalt zwischen den Dichtflächen des Siebrads und den benachbarten Dichtflächen der Gehäuseplatten so eng ist im Verhältnis zur Viskosität des filtrierten Mediums, dass keine Leckströmungen auftreten, die sich in dem zu den Außenseiten hin offenen Spalt bilden. Kurzgefasst, kann bei einer gattungsgemäßen Siebrad-Filtriervorrichtung keine hermetische Dichtung zur Außenseite hin erreicht werden, sondern die Spaltweite wird vielmehr so geringgehalten, dass das Medium aufgrund seiner Viskosität nicht den nach außen offenen Spalt zwischen Siebrad und Gehäuse entlang bis zur Außenseite fließen kann. Niedrigviskose, wässrige Medien hingegen würden randseitig herausfließen und können daher aufgrund der offenen Bauweise der Siebrad-Filtriervorrichtung nicht verarbeitet werden.

Die DE 3341508 A1 zeigt eine weitere gattungsgemäße Filtriervorrichtung, bei der zudem eine Antriebsvorrichtung offenbart ist. Diese besteht aus einem Antriebselement in Form eines Hydraulikzylinders, der an einer Seitenkante des Gehäuses befestigt ist, einem Übertragungshebel sowie einer Freilaufeinheit, bestehend aus einem Ritzel, das in eine Außenverzahnung des Siebrads eingreift, und einem Freilauf, der eine Rückholbewegung des Übertragungshebels erlaubt, ohne dabei die Siebscheibe zu bewegen.

Die DE 3522050 A1 zeigt eine Siebrad-Filtriervorrichtung mit einem Antrieb über eine am Außenumfang des Siebrads ausgebildete Klinkenverzahnung und mit einem Vorschubstößel, der in die Verzahnung eingreift, um das Siebrad schrittweise zu bewegen.

In DE 299 08 735 U1 ist eine Siebrad-Filtriervorrichtung beschrieben, die eine Rückspüleinrichtung aufweist. Zur Rückspülung ist eine Einrichtung zur Druckerhöhung in der Rückspülleitung vorgesehen. Ein Betrieb der Filtriervorrichtung bei hohen Drücken und Maßnahmen zur Eindämmung von Leckströmungen sind nicht offenbart. DE 39 02 061 A1 beschreibt ebenfalls eine Siebrad-Filtriervorrichtung mit einer Rückspüleinrichtung ohne besondere Eignung für Hochdruckanwendungen.

Die in WO 2014 /184 220 A1 gezeigte Siebrad-Filtriervorrichtung ist darauf ausgerichtet, Druckschwankungen zu minimieren, ist jedoch ebenfalls nicht explizit für Hochdruckanwendungen vorgesehen und geeignet.

Die Druckschriften US 8 202 423 B2, CN 101 602 249 A und US 8 540 874 B2 beschreiben weitere Siebrad-Filtriervorrichtungen.

Die besonderen Vorteile einer gattungsgemäßen Filtriervorrichtung liegen darin, dass auf dem Siebrad eine Vielzahl von Einzelsieben platziert werden kann, welche sukzessive durchströmt werden und an einer vom Fließkanal abgewandten Position am Gehäuse zu Reinigungszwecken leicht zugänglich sind oder ausgetauscht werden können. Auch ist der Aufbau der Filtriervorrichtung aufgrund des schichtweisen Aufbaus des Gehäuses einfach und kostengünstig.

Die Hauptschwierigkeit liegt jedoch in der Abdichtung zwischen den äußeren Gehäuseplatten und dem dazwischen eingeschlossenen Siebrad. Die Gehäuseteile müssen unter Einschluss des Siebrades derart gegeneinander verspannt werden, dass der Fließdruck keine zu starke Aufweitung des Gehäuses bewirkt und dadurch keine entsprechenden Leckstellen ausgebildet werden, durch welche Fluid übermäßig an den Seitenkanten des Gehäuses austritt. Andererseits muss dauerhaft eine Beweglichkeit des Siebrades gegeben sein, das bei zu starker Einklemmung nicht mehr drehbar ist. Es muss also in allen Betriebszuständen eine bestimmte Mindest-Spaltweite zwischen den stirnseitigen Dichtungsflächen am Siebrad und den gegenüberliegenden Anlageflächen an den gehäuseseitigen Einlauf- und Auslaufplatten gegeben sein. Die erforderliche Spaltweite hängt dabei von dem jeweils zu verarbeitenden Fluid und dessen Viskosität, von der Verarbeitungstemperatur und vom Fließdruck im Bereich der Siebstelle ab. Während ein grundsätzliches Bestreben also die Dichtigkeit gegen Leckströmungen zur Randseite hin ist, ist andererseits auch immer eine ausreichende Spaltweite erforderlich, damit ein sehr geringfügiger Austritt des Fluids über die Dichtungsstege hinweg möglich bleibt und durch das Fluid selbst eine Art Schmierfilm an beiden Stirnseiten des Siebrads ausgebildet wird.

Eine entsprechende Anpassung der Höhe des Siebrads und der Höhe der ebenfalls zwischen den Ein- und Auslaufplatten positionierten Distanzelemente, welche das Siebrad einschließen, ermöglichen die Einstellung einer für den beabsichtigten Verarbeitungsprozess spezifischen Spaltweite, die jedoch im Bereich von wenigen Mikrometern liegt, sodass die Fertigung der Distanzelemente und des zugehörigen Siebrads, welche zusammen die zwischen Ein- und Auslaufplatte eingefügte, sogenannte Innenpaarung bilden, sehr schwierig ist. Es hat sich in der Praxis gezeigt, dass sich selbst bei einer sehr sorgfältigen Berechnung und Fertigung der Spaltweiten Probleme hinsichtlich der Beweglichkeit des Siebrads ergeben, die nur durch eine Reduzierung der Vorspannung behoben werden können, was wiederum zum Problem der Undichtigkeit führt.

Bei den an sich bekannten, modernen Konzepten einer Siebrad-Filtriervorrichtung sind jeweils wenigstens zwei Siebstellen gleichzeitig in der durchflossenen Querschnittsfläche, die nachfolgend als Durchströmungsbereich bezeichnet ist. Der Durchströmungsbereich ist der frontal angeströmte, für die Filtrierung nutzbare Flächenbereich. Üblicherweise befindet sich eine erste Siebstelle in teilweiser Überschneidung mit dem Durchströmungsbereich, sodass sich in der ankommenden Siebkavität der Betriebsdruck aufbaut. Eine weitere Siebstelle ist vollständig oder nahezu vollständig innerhalb des Durchströmungsbereichs positioniert. Ein Teil der zweiten Siebstelle oder ein Teil einer dritten Siebstelle befindet sich an dem in Rotationsrichtung gesehenen oberen Rand in teilweiser Überdeckung mit dem Durchströmungsbereich. Die vom Durchströmungsbereich angeschnittenen Siebkavitäten, die sich in diesen hinein oder aus diesem heraus bewegen, stehen aber vollständig unter Betriebsdruck, auch wenn sie nur eine kleine flächenmäßige Überdeckung mit dem Durchströmungsbereich besitzen. Daher ist der Druckbereich größer als der Durchströmungsbereich und es wird ein weitgehend druckkonstanter Betrieb der Filtriervorrichtung ermöglicht, da es keine Winkelstellung des Siebrads gibt, in der der Fließweg ganz oder zu einem wesentlichen Teil unterbrochen ist.

Der in der solchermaßen abgesperrten Siebstelle eingeschlossene Kunststoff steht nach wie vor unter dem Betriebsdruck von bis zu 500 bar. Damit stehen nicht nur der unmittelbar durchströmte Bereich und die angrenzenden Flächenbereiche von denjenigen Siebstellen unter Druck, welche in teilweiser Überdeckung mit dem Durchströmungsbereich sind, sondern auch noch diejenigen Siebkavitäten, die bereits aus dem aktiv durchflossenen Druckbereich heraus bewegt sind. Geht man von einer üblichen Anzahl von mindestens 10 Siebstellen, insbesondere 13 Siebstellen, auf dem Siebrad aus, so erstreckt sich der druckbeaufschlagte Bereich in Rotationsrichtung zwischen einer ersten Siebstelle, die soeben in teilweise Überdeckung mit dem Durchströmungsbereich geraten ist, bis hin zu der letzten Siebstelle vor Eintritt in eine Siebwechselposition. Folglich stehen mehr als die Hälfte der auf dem Siebrad angeordneten Siebstellen unter hohem Innendruck und tragen zur Aufweitung des Schmierspalts bei und verursachen Leckströmungen.

In der DE 10 2017 100 032 A1 sind die Zusammenhänge beschrieben, die sich in Bezug auf die Geometrie des Siebspalts während des Betriebs ergeben. Die Spaltweite ist während des Betriebs keine geometrisch konstante Größe, da sich durch den Innendruck während des Filtrierbetriebs der Spalt aufbereitet durch Einfügung einer Spaltweitenanpassungsschicht zwischen den Distanzelementen und einer der benachbarten Gehäuseplatten kann ein bestimmter Betriebspunkt so eingestellt werden, dass einerseits der Spalt ausreichend groß ist, um mit dem Fluid, welches auch als Schmierstoff dient, gefüllt zu werden und die Bewegung des Siebrads zu ermöglichen und andererseits, dass die Spaltweite in Bezug auf der einen maximalen Innendruck im Betrieb so weit begrenzt ist, dass keine größeren Leckströmungen auftreten. Unkontrollierte Leckströmungen sollen vermieden werden, damit Baugruppen, die an der Außenseite der Filtriervorrichtung angeordnet sind wie Messfühler, eine schwenkbare Tür an einer Siebwechselstation oder der Antrieb zum schrittweisen Drehen des Siebrads durch austretendes, an der Außenseite erstarrendes Fluid beeinträchtigt werden. Eine solche Einstellung des Betriebspunkts ist für übliche Betriebsdrücke von etwa 250 bar, maximal bis 300 bar, insbesondere durch Einfügung einer Spaltweitenanpassungsschicht, ohne weiteres möglich, wobei eben sowohl die Gängigkeit des Siebrads im nahezu drucklosen Zustand ebenso ermöglicht sein soll wie Leckströmungen bei dem maximalen Betriebsdruck verhindert oder reduziert werden sollen.

Die Schwierigkeit der Anpassung für einen bestimmten Betriebszustand besteht also nicht darin, die Filtriervorrichtung überhaupt für einen hohen, aber in engen Grenzen konstanten Betriebspunkt auslegen zu können, sondern darin, einen Betrieb im nahezu drucklosen Zustand ebenso wie bis zum maximalen Betriebsdruck zu gewährleisten. Hier kommen die bekannten Konzepte bei den genannten Maximaldrücken von 250 bar bis 300 bar an ihre Grenzen.

Die Aufgabe der vorliegenden Erfindung besteht somit darin, eine Hochdruck-Siebradfiltriervorrichtung anzugeben, bei welcher ohne individuelle Anpassung der Vorspannung der Gehäuseteile vor oder während des Betriebs die Funktionsfähigkeit der Filtriervorrichtung in einem drucklosen Zustand ebenso gewährleistet sein soll wie in einem anderen Betriebspunkt, bei dem das Fluid mit einem hohen Druck von 500 bar oder mehr durch die Filtriervorrichtung gepresst wird.

Diese Aufgabe wird durch eine Siebrad-Filtriervorrichtung für die Hochdruckfiltration einer Kunststoffschmelze mit den Merkmalen des Anspruchs 1 gelöst.

Das erfindungsgemäße Konzept sieht eine prinzipiell unveränderte Bauweise einer Siebrad-Filtriervorrichtung vor, bei der jedoch der Gehäusespannbolzen, der den Lagerring trägt, der Lagerring selbst sowie die Fläche der durchströmten Siebstelle und der angrenzenden, druckbeaufschlagten Siebstellen in besonderer Weise aufeinander abgestimmt sind.

Insgesamt ergibt sich durch diese Abstimmung für die Hochdruckfiltration von mind. 500 bar, dass bei einem Siebrad der äußere Durchmesser, der die Siebkavitäten begrenzt und der den Beginn einer äußeren, ringförmigen Dichtfläche am Siebrad bildet, annähernd gleich groß ist wie bei einer Siebrad-Filtriervorrichtung nach dem Stand der Technik. Somit ist auch das Gehäuse ungefähr gleich groß.

Während aber nach dem Stand der Technik der Durchmesser der inneren ringförmigen Dichtfläche, die die Siebkavitäten begrenzt, so klein wie möglich gewählt wird, um die radiale Ausdehnung und damit die für die Filtration nutzbare Siebfläche zu vergrößern, sind nach der Erfindung die Siebstellen mehr an den Außenrand des Siebrads gedrängt. Dabei treten der innen liegende Lagerring und/oder die innere Dichtfläche auf dem Siebrad als große, scheinbar nutzlose Flächenbereiche hervor. Die Erfindung kehrt also bewusst von dem naheliegenden Ansatz ab, bei gegebener Baugröße des Gehäuses der Filtriervorrichtung die zur Filtration nutzbare Siebfläche auf dem Siebrad zu vergrößern bzw. bei gegebener Siebfläche die Baugröße des Gehäuses der Filtriervorrichtung zu verkleinern. Die nach der Erfindung vorgesehene Anordnung kleiner Siebstellen eher am Außenrand eines im Durchmesser großen Siebrads ist auf den ersten Blick widersinnig und vermeintlich wirtschaftlich nachteilig.

Die Erfindung sieht eine besondere geometrische Abstimmung des Lagerrings, der Gehäusespannbolzen und des sog. Aktivdruckflächenbereichs vor. Der Aktivdruckflächenbereich umfasst alle Flächen von denjenigen Siebstellen, die gleichzeitig unter Betriebsinnendruck stehen. Es handelt sich um eine auf die Ein- und Auslaufplatte projizierte Fläche, also diejenige Fläche, die im Zusammenhang mit dem Betriebsinnendruck die Aufweitkraft auf das Gehäuse ausübt und damit eine Aufspreizung der Schmierspalte zwischen dem Siebrad und den angrenzenden Flächen des Gehäuses hervorruft.

Die Fläche des Aktivdruckflächenbereichs ist in der Regel größer als der Durchströmungsbereich, da Siebstellen, die nur in teilweise Überdeckung ihrer Fläche mit dem durchströmten Bereich sind, dennoch vollständig unter Betriebsinnendruck stehen. Vorgesehen ist:
- dass eine Querschnittsfläche A2 des Lagerrings wenigstens das 9fache, insbesondere das 9 bis 13fache, einer Querschnittsfläche A1 des zentralen Gehäusespannbolzens beträgt und
- dass die Querschnittsfläche A1 des zentralen Gehäusespannbolzens das 0,1fache bis 0,4fache der Fläche A3 des Aktivdruckflächenbereichs beträgt.

Bevorzugt wird ein bestimmter Schlankheitsgrad des Aktivdruckflächenbereichs mit der Fläche A3 vorgegeben, wobei die mittlere Länge des bogenförmigen Aktivdruckflächenbereichs das 1,9fache bis 2,5fache der radialen Breite beträgt. Die Länge wird hierzu auf einem mittleren Teilkreis gemessen, der durch das Zentrum der Siebstelle läuft. Besitzt die Siebstelle keine symmetrische Kontur, so wird stattdessen als Bezugspunkt für den Teilkreis der Flächenschwerpunkt der Siebstelle gewählt. Damit wird zusätzlich zu den anderen geometrischen Beziehungen vorgegeben, dass die Aktivzone eher lang und schmal als kurz und breit ist.

Angesichts der hohen Vorspannkräfte und der daraus resultierenden Flächenpressungen sieht eine bevorzugte Ausführungsform vor, dass die Dicke des Einlaufblocks und des Auslaufblocks jeweils wenigstens das 2,5fache bis 3,5fache der Dicke des dazwischen eingefügten Lagerrings und/oder der Distanzelemente beträgt.

Der Aktivdruckflächenbereich sollte auf den Bereich begrenzt sein, der benachbart zu den Mündungen der Ein- und Auslaufkanäle ist. Um zu vermeiden, dass Siebkavitäten unter Druck stehen bleiben, nachdem sie aus dem Durchströmungsbereich herausbewegt wurden, ist es vorteilhaft, wenigstens eine Druckentlastungsbohrung im Gehäuse vorzusehen, die in der bei Rotation des Siebrads von den Siebstellen überstrichenen Spur mündet und über einen Fließkanal fluidleitend mit einer Außenseite des Gehäuses verbunden ist. Der Bereich bei der Druckentlastungsbohrung bildet somit eine Drucksenke und es wird ein Tangentialfließweg geschaffen, der sich im Wesentlichen von der unter Druck stehenden, abgeschlossenen Siebkavität in Rotationsrichtung erstreckt.

Dadurch werden diejenigen Siebkavitäten, die zuvor durchströmt waren und noch unter Druck stehen, wenn sie aus dem Durchströmungsbereich herausbewegt werden, schlagartig druckentlastet. Als Folge davon wird nur noch durch die unmittelbar durchströmten Siebstellen eine Aufweitung des Gehäuses und eine Vergrößerung des Spaltes zwischen dem Siebrad und den angrenzenden Gehäuseplatten bewirkt. Es verbleiben jedoch keine länger unter Druck stehenden Siebkammern, die zur Aufweitung des Gehäuses außerhalb der Druckzone beitragen und bei denen ein Druckabbau nur schleichend durch Leckströmungen möglich ist.

Die nach der Erfindung vorgesehene tangentiale Druckentlastung erfolgt nun derart, dass die in Rotationsrichtung vorne, oben liegende Siebstelle mit der Mündungsöffnung einer Druckentlastungsbohrung in Überdeckung gelangt, sobald diese Siebstelle den Druckbereich vollständig verlassen hat und keine Fließverbindung mehr mit dem durchströmten Bereich besteht. Dazu ist geometrisch vorgesehen, dass die Druckentlastungsbohrung in der bei Rotation des Siebrads von den Siebstellen überstrichenen Spur mündet und über einen Fließkanal fluidleitend mit einer Außenseite des Gehäuses verbunden ist. Wesentlich ist dabei, dass der Abstand zwischen der Mündung der Druckentlastungsbohrung und dem in Rotationsrichtung gesehenen vorderen, oberen Rand der Trichtermündung der Ein- und Ablaufkanäle immer größer ist als die maximale Bogenlänge der Siebstellen ist. Das hat zur Folge, dass die Siebkavität zunächst vollständig von dem durchflossenen Bereich getrennt ist und dass das Siebrad dann etwas weitergedreht werden muss, bis sich eine Fließverbindung zwischen der abgeschlossenen, aber noch unter Druck stehenden Siebkavität und der Druckentlastungsbohrung einstellen kann.

Da Kunststoffschmelzen kompressibel sind, erfolgt die Druckentlastung eigenständig dadurch, dass an der Druckentlastungsbohrung eine geringe Menge an Kunststoffschmelze austritt und abgeleitet wird. Mit dem abgeschlossenen Druckausgleich endet das Abfließen von Kunststoffschmelze aus der Siebkavität schlagartig wieder, das heißt, die Siebkavität bleibt gefüllt.

Indem nach der Erfindung gezielt eine einmalige Druckentlastung jeder verschmutzten Siebstelle bewirkt wird, kann die Anzahl druckbeaufschlagter Siebkavitäten auf maximal drei begrenzt werden, wovon mindestens zwei während des Betriebs in teilweise Überschneidung mit dem Durchströmungsbereich sind und eine zur Druckentlastungsbohrung bewegt wird.

Da es zur Druckentlastung notwendig ist, geringe Mengen des in der Siebstelle komprimierten Kunststofffluids abzuführen, erfolgt bevorzugt die Abführung von der Druckentlastungsbohrung ausgehend durch einen Druckentlastungskanal, der bis in den an der Unterseite der Siebrad-Filtriervorrichtungen meist vorhandenen Rückspülbereich führt. Durch die Rückspülungseinrichtung können an den Siebelementen anhaftende Schmutzpartikel gelöst werden, wozu die Abfuhr der Kunststoffschmelze mit den Schmutzpartikeln notwendig ist, sodass die Unterseite der Filtriervorrichtung von sonstigen Einrichtungen freigehalten wird und dort geeignete Auffangvorrichtungen bereitgestellt werden können.

Insbesondere ist die Druckentlastungsbohrung auf der Seite der Einlaufplatte vorgesehen. Der Rückspülkanal und die Druckentlastungskanäle sollten dabei möglichst im gleichen Bereich der Filtriervorrichtung, nämlich in deren unterem Bereich, enden, da dann das Material von dort mittels Schwerkraft unmittelbar in einen unterhalb der Filtriervorrichtung positionierten Auffangbehälter geleitet werden kann.

Möglich ist auch, wenigstens eine Druckentlastungsbohrung auf der Seite der Auslaufplatte vorzusehen, da dort gereinigte Schmelze vorliegt, und die Druckentlastungsbohrung direkt mit dem drucklosen Teils des Rückspülkanals in der Gehäuse-Auslaufplatte zu verbinden. Damit kann die ohnehin notwendige Rückspülung der Siebeinsatzelemente in den Siebkavitäten zumindest teilweise mit derjenigen Menge an Kunststoffschmelze bewirkt werden, welche zur Druckentlastung über den tangentialen Fließweg abgeleitet wurde. Somit kann durch das stoßweise zur Druckentlastung austretende Fluid eine Zusatzfunktion ausgeübt werden und die Leistung der Antriebsvorrichtung der Rückspülvorrichtung, durch die beispielsweise ein Kolben bewegt wird, um die Rückspülung auszuführen, kann reduziert werden. Außerdem muss weniger Schmelze für die Rückspülung aus dem Produktionsstrom abgezweigt werden.

Bei einer Siebrad-Filtriervorrichtung, die ohnehin mit einer Rückspülvorrichtung versehen ist, bewirkt die erfindungsgemäße Druckentlastung in der Bilanz also keinen erhöhten Verlust des filtrierten Mediums.

Eine weitere bevorzugte Ausführungsform der Erfindung sieht vor, zusätzlich wenigstens einen radialen Druckentlastungsfließweg zu ermöglichen.

Mit "radial" ist in diesem Sinne eine Strömung von der Position der Siebkavitäten auf dem Siebrad ausgehend nach innen zum Zentrum oder nach außen zum Außenumfang gemeint, ohne dass die Fließrichtung streng radial im geometrischen Sinne erfolgen muss.

Insbesondere kann der Lagerring, auf dem das Siebrad gleitend gelagert ist, zur weiteren Druckentlastung herangezogen werden. Kunststoffschmelze, die durch den in Nachbarschaft des Druckbereichs aufgeweiteten Siebspalt fließt, gelangt in den Lagerring, was zum Zwecke der Ausbildung eines Gleitlagers auch grundsätzlich beabsichtigt ist. Im Hochdruckbetrieb tritt allerdings lokal mehr Kunststoffschmelze in den Bereich des Lagerrings über, als dort zur Schmierung benötigt wird. Um zu verhindern, dass sich axiale Leckströmungen entlang des Lagerrings ausbilden, die frontal an der Gehäuseein- oder -auslaufplatte austreten, ist wenigstens eine zusätzliche Druckentlastungsbohrung vorgesehen, die sich vorzugsweise auf einer Winkelposition befindet, die sich neben dem Durchströmungsbereich befindet oder unterhalb davon, bis maximal am unteren Tiefpunkt des Lagerrings. Wenn sich die durchströmte Siebstelle beispielsweise auf einer 3-Uhr-Position befindet, wobei 12 Uhr die Gehäuseoberseite und 6 Uhr die Gehäuseunterseite darstellt, dann ist die radiale Druckentlastungsbohrung bevorzugt auf einer Position zwischen 2 Uhr und 6 Uhr angeordnet.

Eine weitere vorteilhafte Ausführungsform sieht vor, auch diejenigen sich einstellenden Leckströmungen aufzufangen und umzuleiten, die sich von dem Druckbereich zum Außenumfang des Siebrads einstellen. Diese gelangen in den Bereich der Außenverzahnung des Siebrads, welche zum Antrieb benötigt wird. Sofern sich Kunststoffschmelze dran festsetzt und bis zur Gehäuseaußenseite transportiert wird, kann sie erstarren, was möglicherweise nach mehreren Umdrehungen des Siebrads zu Beeinträchtigungen des Antriebs führt. Um dem entgegenzuwirken, ist nach der Erfindung vorgesehen, eine weitere Druckentlastungsöffnung in den Spalt zwischen der Verzahnung am Außenumfang des Siebrads und dem angrenzenden Distanzelement einzubringen, sodass eventuell in den Spalt eingedrungene Schmelze aufgrund der Schwerkraft nach außen abgeleitet werden kann, insbesondere ebenfalls zu dem unteren Bereich des Gehäuses, von wo sie in einen darunter aufgestellten Auffangbehälter abfließen kann.

Vorteilhaft ist, den wenigstens einen tangentialen Druckentlastungskanal an der Seite der Einlaufplatte vorzusehen, weil dort ein freier Zugang zur Siebkavität besteht, während abgewandt davon, also an der Rückseite des Siebrads, die Öffnung durch die in die Siebkavität eingesetzte Lochplatte, welche die eigentlichen Siebelemente stützt, teilweise verdeckt ist.

Der Querschnitt in Fließrichtung - also von der Druckentlastungsbohrung bis zu einer Entlastungsöffnung an der Gehäuseunterseite nimmt im Verlauf des Fließwegs nicht ab, sondern weitet sich vorzugsweise. Das verhindert, dass Fremdkörper oder Kunststoffpfropfen, die sich z.B. aus Restmaterial aus vorhergehenden Produktionszyklen abgelagert haben oder degradiertes Material einen Stau im Kanal verursachen können, der die Druckentlastung dann behindern würde. Diese Ausbildung mit einem sich erweiternden Kanalquerschnitt gilt vorzugsweise für alle Kanäle zur Abfuhr von Material aus dem Gehäuse bis in eine Auffangwanne.

Die Erfindung wird nachfolgend mit Bezug auf das in den Zeichnungen dargestellt Ausführungsbeispiel näher beschrieben. Die Figuren zeigen im Einzelnen:
- Fig. 1: eine Draufsicht auf eine Zwischenebene einer Siebrad-Filtriervorrichtung nach dem Stand der Technik;
- Fig. 2: eine Draufsicht auf ein Siebrad einer Siebrad-Filtriervorrichtung nach der Erfindung;
- Fig. 3: eine perspektivische Ansicht auf ein Gehäuse der Siebrad-Filtriervorrichtung,
- Fig. 4: die perspektivische Ansicht wie in Figur 1, wobei die Einlaufplatte des Gehäuses entfernt ist;
- Fig. 5: eine perspektivische Ansicht auf die Siebrad-Filtriervorrichtung ohne Siebrad in einer Zwischenebene;
- Fig. 6: eine perspektivische Ansicht auf die Siebrad-Filtriervorrichtung mit teilweise geschnitten und transparent dargestellter Einlaufplatte;
- Fig. 7: eine perspektivische Ansicht auf die Siebrad-Filtriervorrichtung mit Siebrad in einer Zwischenebene;
- Fig. 8: eine perspektivische Schnittansicht durch die Rotationsachse des Siebrads;
- Fig. 9: ein vergrößertes Detail aus Figur 8 und
- Fig. 10: ein Verspannungsdiagramm für Teile der Filtriervorrichtung.

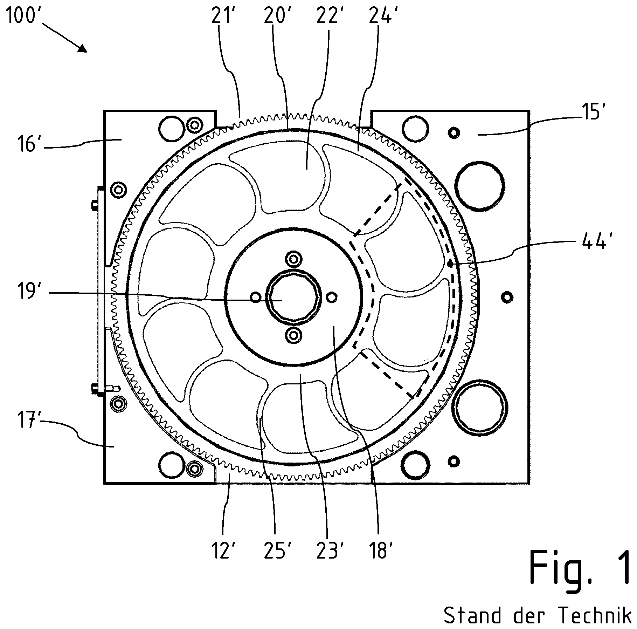

Figur 1 ist eine Draufsicht auf eine Zwischenebene einer Siebrad-Filtriervorrichtung 100' nach dem Stand der Technik. Abgenommen ist hierbei eine Einlaufplatte, über welche das Fluid zu Siebstellen 22' auf einem rotierbaren Siebrad 20' geleitet wird. Im Hintergrund ist eine Auslaufplatte angeordnet, über welche das Fluid von der jeweiligen Siebstelle 22' nach außen weggeleitet wird. Die Siebstellen 22' sind jeweils durch eine ringförmige innere Dichtfläche Dichtsteg' und eine ringförmige äußere Dichtfläche 24' sowie durch Stege 25' begrenzt, welche sich zwischen der inneren Dichtfläche 23' und der äußeren Dichtfläche 24' erstrecken. Das Siebrad 20' ist von zwei kleineren Distanzelementen 16', 17' links und einem größeren Distanzelement-15' rechts eingerahmt. Im Bereich des Distanzelementes 15' befindet sich ein durch die gestrichelte Linie auf dem Siebrad 20' angedeuteter, druckbeaufschlagter Aktivdruckflächenbereich 44'. Zur Zwischenebene gehört weiterhin ein Lagerring 18', durch den ein Gehäusespannbolzen 19' geführt ist. Auf dem Lagerring 18' ist das Siebrad 20' gelagert; dazwischen ist ein Gleitlager ausgebildet.

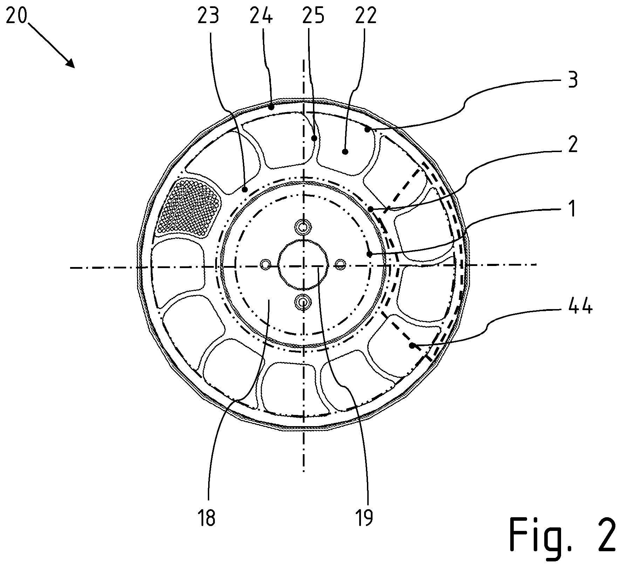

Figur 2 zeigt die Draufsicht auf ein nach der Erfindung optimiertes Siebrad 20 mit insgesamt 13 Siebstellen 22. Der Außendurchmesser 3 der äußeren Dichtfläche 24 und zugleich des Außenrands der Siebstellen 22 ist gegenüber dem Siebrad 20' in Figur 1 unverändert.

Deutlich größer ist der Außendurchmesser des Lagerrings 18. Zum Vergleich zeigt die Umfangslinie 1 den Umfang des Lagerrings 18' aus Figur 1. Damit sind auch die innere Dichtfläche 23 und die inneren Begrenzungslinien der Siebstellen 22 nach außen versetzt. Zum Vergleich zeigt die Umfangslinie 2 den entsprechenden Umfang aus Figur 1.

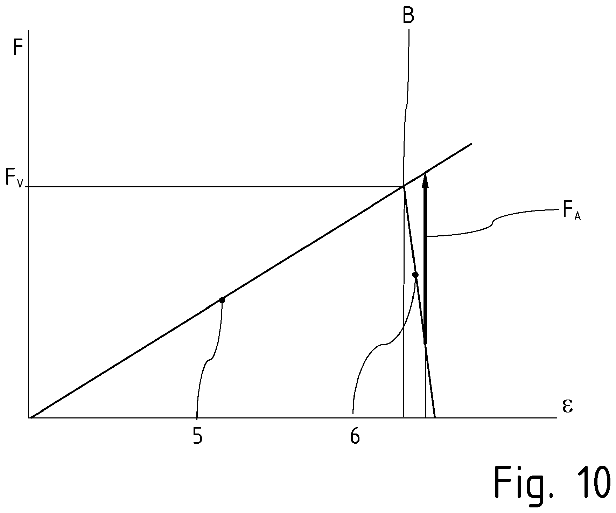

In Figur 10 ist die Kraft F über der Dehnung ε in dem System: Gehäusespannbolzen-Lagerring-Gehäuseplatten in Form eines Verspannungsdiagramms aufgetragen. Es handelt sich um eine qualitative, nicht maßstäbliche Zeichnung, anhand der das folgende Beispiel für die erfindungsgemäße Auslegung einer Siebrad-Filtriervorrichtung erläutert werden soll:
Eine Fläche A3 des Aktivdruckflächenbereichs, die sich auf drei Siebstellen 22 bezieht, wird mit A3=100 cm² angesetzt. Die Auslegung für die Hochdruckfiltration geht von einem maximalen Betriebsdruck von 500bar aus. Mit diesem Druck entsteht an dem Aktivdruckflächenbereich eine Aufweitkraft F_{A} von 500 kN, entsprechend etwa 50 to, die zum Aufweiten der Siebspalte zwischen dem Siebrad 20 und der Einlaufplatte 11 bzw. dem Siebrad 20 und der Auslaufplatte 12 und zu daraus resultierenden verstärkten Leckströmungen führen. Die Steigung der Linie 5 in Fig. 10 entspricht der Federkonstante des Gehäusespannbolzens 19, der durch den Lagerring 18 geführt ist.

Das durch den Gehäusespannbolzen 19 vorgespannte Paket aus Einlaufplatte 11, Lagerring 18 und Auslaufplatte 12 kann mit ausreichender Genauigkeit als ein einheitlicher Flansch mit der Querschnittsfläche des Lagerrings 18 betrachtet werden, da Einlaufplatte 11 und Auslaufplatte 12 sehr steif sind, insbesondere wenn in bevorzugter Weise die Dicke von Ein- und Auslaufplatte 11, 12 jeweils mit dem 2,5fachen bis 3,5fachen der Höhe, also der axialen Erstreckung, des Lagerrings 18 angesetzt wird.

Beispielsweise beträgt die Fläche des Gehäusespannbolzens A1=33 cm² und die Ringfläche A2=357m². Da die Querschnittsfläche am Lagerring 18 also nach Abzug der zentralen Bohrung für den Gehäusespannbolzen Gehäusespannbolzeneine Ringfläche A2 ist, deren Betrag vorzugsweise etwa das 10fache der Querschnittsfläche A1 des Gehäusespannbolzens 19 beträgt, ist die Federkonstante ca. 10mal höher; die Steigung der Linie 6 entspricht - qualitativ, nicht maßstäblich - dieser Federkonstanten.

An einem Betriebspunkt B ist eine Vorspannkraft F_{V} aufgebracht, die zu einer Stauchung des oben beschriebenen Pakets führt. Die im Betrieb maximal herrschende Aufweitkraft F_{A} entlastet das komprimierte Paket teilweise, ohne dass die Vorspannung ganz aufgehoben wird.

Die auf die Abzisse heruntergeloteten Linien geben zum einen die Verformung bei anliegender Vorspannkraft F_{V} an - ohne Aufweitkraft F_{A} infolge Druckströmung - und zum anderen bei Druckbeaufschlagung im Betrieb.

Die Vorspannung wird so eingestellt, dass die Schmierspalte zwischen Einlaufplatte 11 und Siebrad 20 und zwischen Auslaufplatte 12 und Siebrad 20 minimal sind, oder sogar so, dass die Schmierspalte gerade nicht mehr vorhanden sind.

Aus der schematischen Darstellung in Figur 10 wird deutlich, dass die Verformungsänderung im Betrieb nur sehr gering ist, weil die erfindungsgemäß vorgesehenen Flächenrelationen zwischen den Flächen A1 und A2 im Verhältnis 1:9 bis 1:13 und damit deutlich abweichend gewählt sind. Dies führt im Diagramm zu der deutlich höheren Steigung der Linie 6 und zu einer so geringen Dehnungsänderung im Betrieb, dass übermäßige Spaltaufweitungen und daraus resultierende stärkere Leckströmungen vermieden werden.

Diese rechnerische Auslegung führt dann zu der konstruktiven Gestaltung, die oben anhand der Gegenüberstellung in den Figuren 1 und 2 erläutert wurde, wobei die Siebstellen nach der Erfindung gegenüber dem Stand der Technik schlanker werden und optisch weiter an den Außenrand rücken und wobei im Zentrum ein scheinbar überdimensionierter und dem üblichen Bestreben nach Siebflächenmaximierung entgegenstehender Lagerring dominiert.

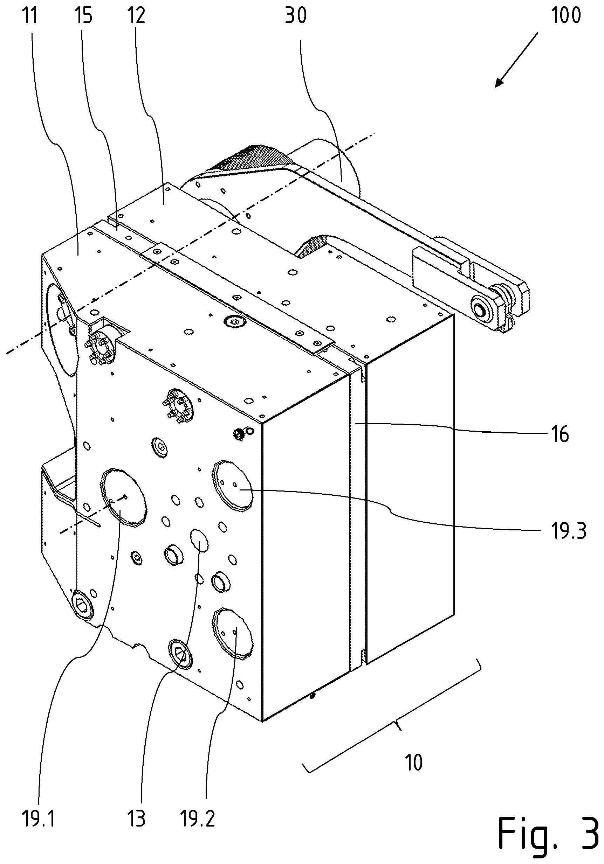

Figur 3 zeigt eine perspektivische Ansicht auf ein Gehäuse 10 einer Siebrad-Filtriervorrichtung 100, und zwar mit Blick auf eine Einlaufplatte 11 mit einem Zulaufkanal 13. Eine Auslaufplatte 12 ist über Distanzelemente 15, 16 mit der Einlaufplatte 11 verbunden, wobei dazwischen ein Zwischenraum ausgebildet ist, in welchem ein Siebrad gelagert ist. Alle drei aneinander liegenden Elemente des Gehäuses 10, also die Einlaufplatte 11, die Distanzelemente 15, 16 und die Auslaufplatte 12 sind über insgesamt sieben Gehäusespannbolzen 19.1, 19.2, 19.3miteinander verschraubt und mit einer für den geplanten Betriebsdruck ausgelegten Vorspannung gegeneinander verspannt. Die Mittelachse des Gehäusespannbolzens 19.1 im Zentrum des Gehäuses bildet zugleich die Rotationsachse des Siebrads. Eine Antriebseinrichtung 30 für das Siebrad ist an der Außenseite des Gehäuses 10 angeordnet.

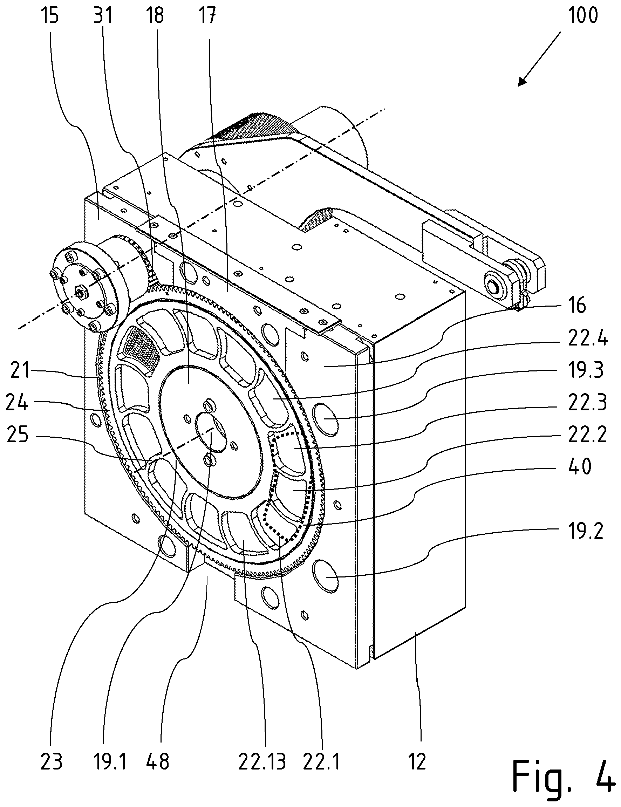

Figur 4 ist eine perspektivische Ansicht auf die Siebrad-Filtriervorrichtung 100, wie in Figur 1, wobei die Einlaufplatte entfernt ist, so dass das innenliegende Siebrad 20 sichtbar ist. Außerdem ist ein weiteres Distanzelement 17 sichtbar, das die beiden seitlichen Distanzelemente 15, 16 am oberen Gehäuserand lückenlos miteinander verbindet. Dadurch ist das Siebrad 20 am Außenumfang nahezu vollständig eingefasst. Öffnungen des Gehäuses 10 bestehen somit nur im unteren Bereich in Form einer Entlastungsöffnung 48, die dazu dient, den gezielten Abfluss von Schmelze in einen unterhalb der Filtriervorrichtung aufgestellten Auffangbehälter zu ermöglichen. Im dargestellten Ausführungsbeispiel besitzt die Filtriervorrichtung einen Antrieb, der über ein Antriebsritzel 31 auf den Zahnkranz 21 wirkt. Im Falle eines alternativen Antriebs über eine Klinke, die in eine geeignete Verzahnung am Außenumfang eingreift, besitzt das Gehäuse wenigstens eine weitere Öffnung im oberen Bereich bei der Eingriffsstelle des Antriebs.

Das Siebrad 20 ist in an sich bekannter Weise mit einer Vielzahl von Siebstellen 22.1...22.13 ausgebildet; im dargestellten Ausführungsbeispiel sind 13 Siebstellen vorgesehen. Die Siebstellen 22.1...22.13 sind jeweils durch eine innere ringförmige Dichtfläche 23 auf der Oberfläche des Siebrads 20, eine äußere, ringförmige Dichtfläche 24 sowie sich dazwischen erstreckende Dichtfläche 25 in Form von Dichtstegen, die von innen nach außen führen, abgegrenzt. Im Zentrum ist ein feststehender Lagerring 18 angeordnet, auf dem das Siebrad 20 gelagert ist. Zwischen der Außenseite des Lagerrings 18 und der Innenseite der zentralen Bohrung des Siebrads 20 ist ein Gleitlager ausgebildet. Am Außenumfang des Siebrads 20 ist ein Zahnkranz 21 ausgebildet.

Die Gehäusespannbolzen 19.1, 19.2, 19.3 bewirken, dass es innerhalb einer Vorspannfläche zu einer Kompression der zwischen den äußeren Gehäuseplatten eingespannten Distanzelemente 15, 16, 17 kommt und dass sich dadurch der Abstand zwischen den Ein- und Auslaufplatten 11, 12 und dem dazwischen eingeschlossenen Siebrad 20 reduziert.

Die punktierte Linie entspricht den Konturen der trichterförmigen Mündungen der Ein- und Auslaufkanäle am Siebrad 20 und stellt den Durchströmungsbereich 40 dar, der für die Filtrierung nutzbar ist. Das Siebrad 20 dreht sich entgegen dem Uhrzeigersinn. Bei der in Fig. 4 gezeigten Winkelstellung des Siebrads 20 befindet sich die Siebstelle 22.1 in teilweiser Überdeckung mit dem Durchströmungsbereich 40. Dadurch herrscht in der gesamten Siebstelle 22.1 der Betriebsdruck. Die Siebstelle 22.2 befindet sich vollständig im durchströmten Bereich 40. Die Siebstelle 22.3 befindet sich ebenfalls in teilweiser Überdeckung mit dem Durchströmungsbereich 40, so dass auch dort der Betriebsdruck herrscht. Die Siebstelle 22.4 ist aus dem Durchströmungsbereich 40 herausgedreht, wobei das darin gespeicherte Fluid immer noch unter Betriebsdruck steht.

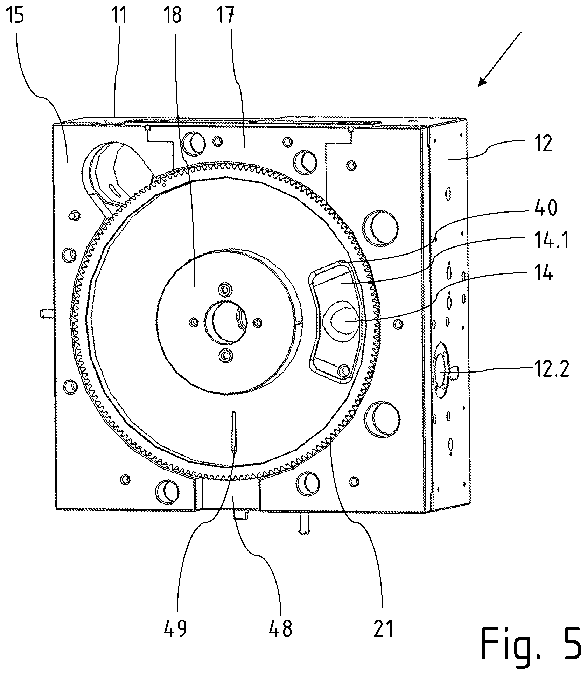

Figur 5 ist eine perspektivische Ansicht auf die Siebrad-Filtriervorrichtung 100 wie in den Figuren 1 und 2, wobei hier auch das Siebrad entfernt ist; zur Orientierung hinsichtlich der Lage des Siebrads ist nur dessen Zahnkranz 21 angedeutet. Die Kontur der Trichtermündung 14.1 des Auslaufkanals 14 entspricht dem Durchströmungsbereich 40. An einer seitlichen Öffnung 12.2 an der Auslaufplatte 12 beginnt ein Rückspülkanal, der in einer langgestreckten, schlitzförmigen Rückspüldüse 49 im unteren Bereich des Siebrads mündet. Bei der Rückspülung austretendes Fluid läuft an der Gehäuseöffnung 48 aus.

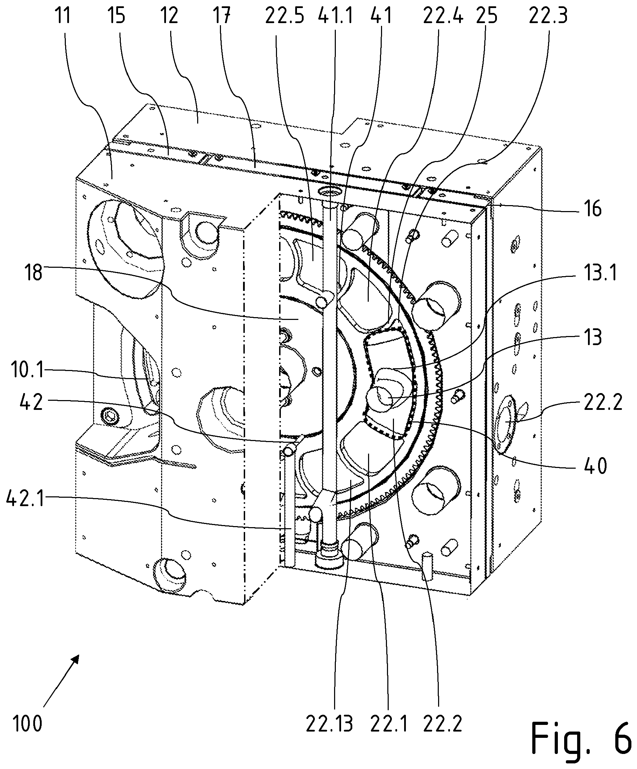

Figur 6 stellt die Filtriervorrichtung 100 mit allen Gehäuseelementen11, 12, 15, 16, 17 und dem Siebrad 20 dar, wobei von der Gehäuseeinlaufplatte 11 der rechte Bereich, in dem der Einlaufkanal 13 angeordnet ist, teilweise geschnitten und transparent dargestellt ist. Links am Gehäuse ist eine Siebwechselposition 10.1 vorgesehen, an der die Einlaufplatte 11 offen ist, so dass dort ein Wechsel der Siebelemente vorgenommen werden kann. Die Siebwechselposition 10.1 ist durch eine nicht dargestellte Tür verschließbar. Gut erkennbar ist die Aufweitung des Einlaufkanals 13 zu einer Trichtermündungsöffnung 13.1. Diese ist in Lage und Form gleich zu der Trichtermündungsöffnung 14.1 (siehe Fig. 5) an der Auslaufplatte 12. Dazwischen ist der punktiert umrissene Durchströmungsbereich 40 ausgebildet, in welchem die Kunststoffschmelze durch die in die Siebstellen 22.1 ...22.13 eingesetzten Siebelemente strömt.

Bei der Position des Siebrads 20 in Figur 6 ist gerade die Siebstelle 22.5 in Überdeckung mit der Druckentlastungsbohrung 41, die seitlich auf das Siebrad 20 geführt ist und sich nach unten in einem Druckentlastungskanal 41.1 fortsetzt. Die Siebkavität an der Siebstelle 22.5 ist somit bereits drucklos. Die bei der Rotation entgegen dem Uhrzeigersinn nachfolgende Siebstelle 22.4 steht noch unter hohem Innendruck. Sie ist nicht mehr in Überdeckung mit dem Durchströmungsbereich 40 und ist durch die Dichtfläche 25 vollständig von der nächsten folgenden Siebstelle 22.3 abgesperrt. Die Siebstellen 22.2, 22.3 befinden sich vollständig im Durchströmungsbereich 40. Die Siebstelle 22.1 gerät gerade in Überdeckung mit dem Durchströmungsbereich 40. Sofern zuvor ein Siebwechsel erfolgt ist, findet an dieser Stelle eine Vorflutung statt und der Innendruck baut sich auf.

Eine weitere Druckentlastungsbohrung 42 führt von der Seite direkt in die Gleitlagerfläche zwischen dem Innenumfang der Lagerbohrung des Siebrads 20 und dem im Gehäuse fest eingespannten Lagerring 18. Sie setzt sich nach unten hin in einem weiteren Druckentlastungskanal 42.1 fort

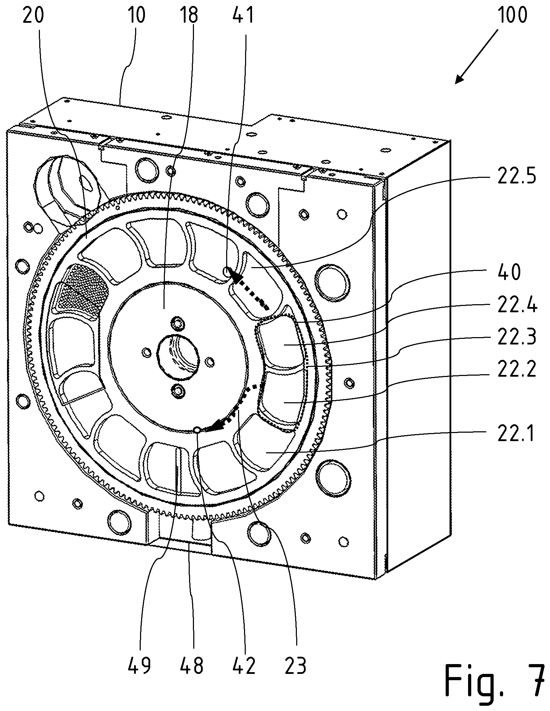

Figur 7 zeigt einen vertikalen Schnitt durch das Gehäuse 10 mit Blick auf das Siebrad 20, wobei die Schnittebene in einer Zwischenebene, in der ein Schmierspalt ausgebildet ist, und parallel zur Ebene des Siebrads 20 verläuft. Die punktierten Pfeile geben die ungefähren Strömungsrichtungen der Kunststoffschmelze von Siebstellen 22.2, 22.3 an, dieim Durchströmungsbereich 40 oder in der Nähe dazu ausgehen und hin zu den Druckentlastungsbohrungen 41, 42 führen. Sie unterschieden sich dadurch, dass der Fluss zur ersten Druckentlastungsbohrung 41 oben in der Spur der Siebstellen 22.1...22.13 des Siebrads 20 erfolgt und damit in etwa "tangential" ist, während der Fluss zur zweiten Druckentlastungsbohrungen 42 unten die innere ringförmige Dichtfläche 23 am Siebrad 20 überwindet und daher als "radial" bezeichnet wird.

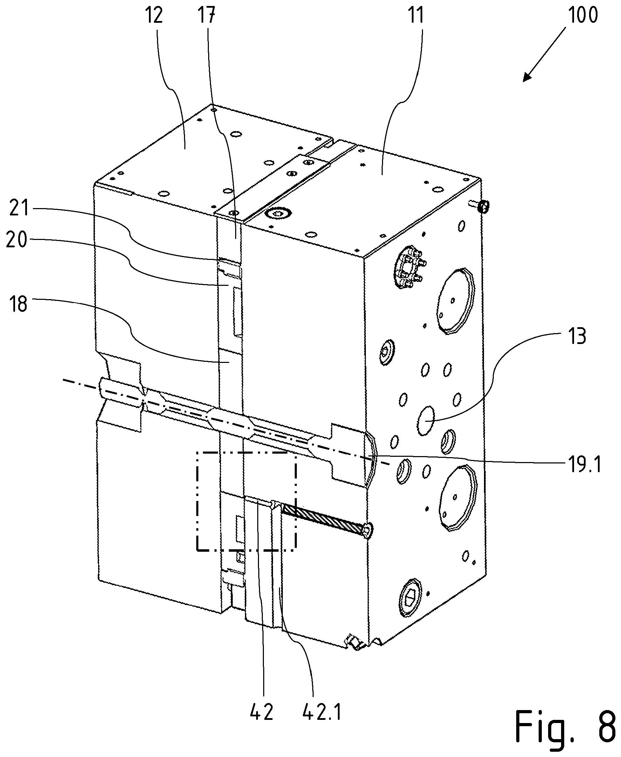

Figur 8 ist eine perspektivische Schnittansicht durch die Rotationsachse des Siebrads 20, die zugleich die Mittelachse des Gehäusespannbolzens 19.1 und des Lagerrings 18 ist. In der Schnittebene ist die untere Druckentlastungsbohrung 42 angeordnet, die sich in dem Druckentlastungskanal 42.1 nach unten fortsetzt.

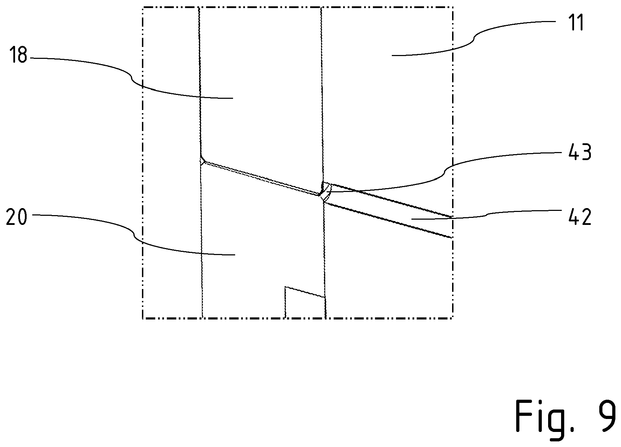

Ein wichtiges Detail in Bezug auf die mit der zweiten Druckentlastungsbohrung 42 bewirkte Druckentlastung, die sog. "radiale" Druckentlastung, wird erst durch die Vergrößerung eines Ausschnitts aus Figur 8 in Figur 9 deutlich. Dort, wo der Lagerring 18 und die Bohrung des Siebrads 20 aneinander liegen und ein Gleitlager ausbilden, sind der Lagerring 20 und das Siebrad 20 randseitig jeweils mit einer Fase versehen, so dass durch die beiden benachbarten Fasen ein Ringkanal 43 mit dreieckigem Querschnitt ausgebildet wird, der im Volumen gegenüber dem Ringspalt des Gleitlagers 26 deutlich vergrößert ist und der die Abfuhr von Kunststoffschmelze zum Zwecke der Druckentlastung ermöglicht, ohne im Übrigen Gehäuseteile oder die Paarung von Siebrad 20 und Lagerring 18 ändern zu müssen.

### Bezugszeichenliste

- 100, 100': Siebrad-Filtriervorrichtung
- 10, 10': Gehäuse
- 10.1: Siebwechselposition
- 11, 11': Einlaufplatte
- 12, 12': Auslaufplatte
- 13, 13': Einlaufkanal
- 13.1: Trichtermündungsöffnung
- 14, 14': Auslaufkanal
- 14.1: Trichtermündungsöffnung
- 15, 16, 17; 15', 16', 17': Distanzelemente
- 18, 18': Lagerring
- 19, 19', 19.1 ... 19.3: Gehäusespannbolzen

- 20, 20': Siebrad
- 21, 21': Zahnkranz
- 22', 22, 22.1...22.13: Siebstellen
- 23, 23': innerer Dichtsteg
- 24, 24': äußerer Dichtsteg
- 25, 25': Dichtsteg
- 26, 26': Gleitlager

- 30: Antriebseinrichtung

- 40: Durchströmungsbereich
- 41: Druckentlastungsbohrung
- 41.1: Druckentlastungskanal
- 42: Druckentlastungsbohrung
- 42.1: Druckentlastungskanal
- 43: Ringkanal
- 44, 44': Aktivdruckflächenbereich
- 48: Entlastungsöffnung
- 49: Rückspüldüse

## Patentansprüche

1. Siebrad-Filtriervorrichtung (100) für die Hochdruckfiltration einer Kunststoffschmelze,
wenigstens umfassend ein Gehäuse (10), das wenigstens aufweist:
- eine Einlaufplatte (11) mit wenigstens einem Einlaufkanal (13),
- eine Auslaufplatte (12) mit wenigstens einem Auslaufkanal (14);
- wenigstens ein zwischen der Einlaufplatte (11) und der Auslaufplatte (12) angeordnetes Distanzelement (15, 16, 17) sowie einen Lagerring (18), auf dem ein zwischen der Einlaufplatte (11) und der Auslaufplatte (12) angeordnetes Siebrad (20) drehbar gelagert ist;
- einen zentralen Spannbolzen (19.1), der durch den Lagerring (18) geführt ist und über den die Einlaufplatte (11) mit der Auslaufplatte (12) unter Einschluss des dazwischen eingefügten Lagerrings (18) verspannt ist,
wobei:
- das Siebrad (20) eine Vielzahl von Siebstellen (22.1 ... 22.13) aufweist, die jeweils zwischen dem Ein- und Auslaufkanal (13, 14) positionierbar und durchströmbar sind,
- zwischen der jeweiligen zum Siebrad (20) gewandten Mündung (13.1, 14.1) des Einlaufkanals (13) und des Auslaufkanals (14) ein Durchströmungsbereich (40) ausgebildet ist,
- die auf Ein- und Auslaufpatte (11, 12) projizierten Flächen aller mit dem Durchströmungsbereich (40) in zumindest teilweiser Überschneidung stehenden Siebstellen (22.1 ... 22.13) gemeinsam einen Aktivdruckflächenbereich (44) bilden,
- zwischen einer Dichtfläche (23, 24, 25) des Siebrads (20) und einer Innenfläche der Einlaufplatte (11) sowie einer Innenfläche der Auslaufplatte (12) jeweils ein Schmierspalt ausgebildet ist,
**dadurch gekennzeichnet, dass**
- dass die Querschnittsfläche A2 des Lagerrings (18) wenigstens das 9fache der Querschnittsfläche A1 des zentralen Spannbolzens (19.1) beträgt;
- dass die Querschnittsfläche A1 des zentralen Spannbolzens (19.1) das 0,1fache bis 0,4fache der Fläche A3 des Aktivdruckflächenbereichs (44) beträgt.

2. Siebrad-Filtriervorrichtung (100) nach Anspruch 1, **dadurch gekennzeichnet, dass** die mittlere Länge eines bogenförmigen Aktivdruckflächenbereichs (44) das 1,9fache bis 2,5fache der Breite beträgt.

3. Siebrad-Filtriervorrichtung (100) nach Anspruch 1 oder 2, **dadurch gekennzeichnet, dass** die Dicke des Einlaufblocks (11) und des Auslaufblocks (12 jeweils wenigstens das 2,5fache bis 3,5fache des Durchmessers des Spannbolzens (19.1) beträgt.

4. Siebrad-Filtriervorrichtung (100) nach einem der Ansprüche 1 bis 3,
**dadurch gekennzeichnet,**
- **dass** in der Einlaufplatte (11) und/oder in der Auslaufplatte (12) wenigstens eine Druckentlastungsbohrung (41) vorgesehen ist, die in der bei Rotation des Siebrads (20) von den Siebstellen (22.1, ..., 22.13) überstrichenen Spur mündet und die über einen Druckentlastungskanal (41.1) fluidleitend mit einer Außenseite des Gehäuses (10) verbunden ist, und
- **dass** bei einer Überdeckung einer Siebstelle (22.1 ... 22.13) mit wenigstens einer Druckentlastungsbohrung (41) keine Überdeckung der Siebstelle (22.1 ... 22.13) mit dem Durchflussbereich (40) besteht.

5. Siebrad-Filtriervorrichtung (100) nach Anspruch 4, **dadurch gekennzeichnet, dass** innerhalb wenigstens eines Schmierspalts wenigstens ein tangentialer Druckentlastungsfließweg gebildet ist, der sich zwischen einer der Mündungen (13.1, 14.1) des Einlaufkanals (13) oder des Auslaufkanals (14) und wenigstens einer in Rotationsrichtung vor dem Durchströmungsbereich (40) mündenden Druckentlastungsbohrung (41) erstreckt.

6. Siebrad-Filtriervorrichtung (100) nach Anspruch 5, **dadurch gekennzeichnet, dass** der Abstand zwischen der Mündung der Druckentlastungsbohrung (41) und dem jeweiligen in Rotationsrichtung vorderen Rand des Durchströmungsbereichs (40) größer als die maximale Ausdehnung der Siebstellen (22.1, ..., 22.13) in Rotationsrichtung ist.

7. Siebrad-Filtriervorrichtung (100) nach einem der Ansprüche 1 bis 6,
**dadurch gekennzeichnet, dass** innerhalb wenigstens eines Schmierspalts wenigstens ein radialer Druckentlastungsfließweg gebildet ist, der sich zwischen dem Durchströmungsbereich (40) und wenigstens einer Druckentlastungsbohrung (42) erstreckt, welche in der Einlaufplatte (11) und/oder in der Auslaufplatte (12) vorgesehen ist, wobei die Druckentlastungsbohrung (42) am Lagerring (18) mündet und über einen im Gehäuse (10) ausgebildeten Druckentlastungskanal (42.1) fluidleitend mit einer Außenseite des Gehäuses (10) verbunden ist.

8. Siebrad-Filtriervorrichtung (100) nach Anspruch 7, **dadurch gekennzeichnet, dass** ein Ringkanal (43) im Siebrad (20) und/oder im Gehäuse (10) ausgebildet ist, der in Fließverbindung zu einem zwischen dem Lagerring (18) und dem Siebrad (20) ausgebildeten ringförmigen Gleitlager (26) steht.

9. Siebrad-Filtriervorrichtung (100) nach Anspruch 8, **dadurch gekennzeichnet, dass** der Ringkanal (43) durch je eine Fase am Außenumfang des Lagerrings (18) und am Innenumfang der den Lagerring (18) aufnehmenden Bohrung im Siebrad (20) gebildet ist.

10. Siebrad-Filtriervorrichtung (100) nach einem der vorhergehenden Ansprüche, **dadurch gekennzeichnet, dass** die Querschnittsfläche A2 des Lagerrings (18) maximal das 13fache der Querschnittsfläche A1 des Spannbolzens (19) beträgt.

## Claims

1. Screen wheel filter device (100) for the highpressure filtration of a plastic melt,
at least comprising a housing (10) which comprises at least:
- an inlet plate (11) with at least one inlet channel (13),
- an outlet plate (12) with at least one outlet channel (14);
- at least one spacer (15, 16, 17) disposed between the inlet plate (11) and the outlet plate (12), and a bearing ring (18) on which a screen wheel (20) disposed between the inlet plate (11) and the outlet plate (12) is rotatably mounted;
- a central tensioning bolt (19.1) which is guided through the bearing ring (18) and by way of which the inlet plate (11) is braced in relation to the outlet plate (12), including the bearing ring (18) inserted therebetween,
wherein:
- the screen wheel (20) has a plurality of screen points (22.1 **...** 22.13) which are in each case able to be positioned between the inlet and the outlet channel (13, 14) and passed through by a flow,
- a flow region (40) is formed between the respective mouth (13.1, 14.1) of the inlet channel (13) and of the outlet channel (14) facing the screen wheel (20),
- the surfaces of all screen points (22.1 **...** 22.13) which at least partially overlap the flow region (40), when projected onto the inlet and the outlet plate (11, 12), conjointly form an active pressure area (44),
- a lubrication gap is in each case formed between a sealing surface (23, 24, 25) of the screen wheel (20) and an inner surface of the inlet plate (11) as well as an inner surface of the outlet plate (12),
**characterized in that**
- **in that** the cross-sectional area A2 of the bearing ring (18) is at least 9 times the cross-sectional area A1 of the central tensioning bolt (19.1);
- **in that** the cross-sectional area A1 of the central tensioning bolt (19.1) is 0.1 to 0.4 times the area A3 of the active pressure area (44).

2. Screen wheel filter device (100) according to Claim 1, **characterized in that** the mean length of an arcuate active pressure area (44) is 1.9 to 2.5 times the width.

3. Screen wheel filter device (100) according to Claim 1 or 2, **characterized in that** the thickness of the inlet block (11) and the outlet block (12) is in each at least 2.5 to 3.5 times the diameter of the tensioning bolt (19.1).

4. Screen wheel filter device (100) according to one of Claims 1 to 3, **characterized in that**
- provided in the inlet plate (11) and/or in the outlet plate (12) is at least one pressure relief bore (41) which opens out in the track swept by the screen points (22.1, ..., 22.13) when the screen wheel (20) rotates and which is fluidically connected to an external side of the housing (10) via a pressure relief channel (41.1), and
- when a screen point (22.1 ... 22.13) is overlapped by at least one pressure relief bore (41), there is no overlap between the screen point (22.1 ... 22.13) and the flow region (40).

5. Screen wheel filter device (100) according to Claim 4, **characterized in that** formed within at least one lubrication gap is at least one tangential pressure relief flow path which extends between one of the mouths (13.1, 14.1) of the inlet channel (13) or of the outlet channel (14) and at least one pressure relief bore (41) that in the direction of rotation opens out in front of the flow region (40).

6. Screen wheel filter device (100) according to Claim 5, **characterized in that** the spacing between the mouth of the pressure relief bore (41) and the respective leading edge of the flow region (40) in the direction of rotation is greater than the maximum extent of the screen points (22.1, **...,** 22.13) in the direction of rotation.

7. Screen wheel filter device (100) according to one of Claims 1 to 6, **characterized in that** formed within at least one lubrication gap is at least one radial pressure relief flow path which extends between the flow region (40) and at least one pressure relief bore (42) provided in the inlet plate (11) and/or in the outlet plate (12), wherein the pressure relief bore (42) opens out at the bearing ring (18) and is fluidically connected to an external side of the housing (10) via a pressure relief channel (42.1) formed in the housing (10).

8. Screen wheel filter device (100) according to Claim 7, **characterized in that** formed in the screen wheel (20) and/or in the housing (10) is an annular channel (43) which is fluidically connected to an annular plain bearing (26) formed between the bearing ring (18) and the screen wheel (20).

9. Screen wheel filter device (100) according to Claim 8, **characterized in that** the annular channel (43) is formed in each case by a chamfer on the external circumference of the bearing ring (18) and on the internal circumference of the bore in the screen wheel (20) that receives the bearing ring (18).

10. Screen wheel filter device (100) according to one of the preceding claims, **characterized in that** the cross-sectional surface A2 of the bearing ring (18) is at most 13 times the cross-sectional surface A1 of the tensioning bolt (19).

## Revendications

1. Dispositif de filtration à roue de tamisage (100) pour la filtration haute pression d'une masse fondue de matière plastique,
comprenant au moins un boîtier (10) qui présente au moins :
- une plaque d'entrée (11) comportant au moins un canal d'entrée (13),
- une plaque de sortie (12) comportant au moins un canal de sortie (14) ;
- au moins un élément d'espacement (15, 16, 17) agencé entre la plaque d'entrée (11) et la plaque de sortie (12) ainsi qu'une bague de palier (18), sur laquelle est montée à rotation une roue de tamisage (20) agencée entre la plaque d'entrée (11) et la plaque de sortie (12) ;
- un boulon de serrage central (19.1), qui est guidé à travers la bague de palier (18) et par le biais duquel la plaque d'entrée (11) est serrée conjointement avec la plaque de sortie (12), y compris la bague de palier insérée entre celles-ci (18),
dans lequel :
- la roue de tamisage (20) présente une pluralité d'emplacements de tamisage (22.1 **...** 22.13) qui peuvent respectivement être positionnés entre les canaux d'entrée et de sortie (13, 14) et peuvent être traversés,
- une région d'écoulement (40) est formée entre l'embouchure (13.1, 14.1) respective, tournée vers la roue de tamisage (20), du canal d'entrée (13) et du canal de sortie (14),
- les surfaces, projetées sur les plaques d'entrée et de sortie (11, 12), de tous les emplacements de tamisage (22.1 **...** 22.13) en chevauchement au moins partiel avec la région d'écoulement (40) forment ensemble une région de surface de pression active (44),
- un interstice de lubrification est formé respectivement entre une surface d'étanchéité (23, 24, 25) de la roue de tamisage (20) et une surface intérieure de la plaque d'entrée (11) ainsi qu'une surface intérieure de la plaque de sortie (12),
**caractérisé**
- **en ce que** la surface de section transversale A2 de la bague de palier (18) vaut au moins 9 fois la surface de section transversale A1 du boulon de serrage central (19.1) ;
- **en ce que** la surface de section transversale A1 du boulon de serrage central (19.1) vaut de 0,1 fois à 0,4 fois la surface A3 de la région de surface de pression active (44).

2. Dispositif de filtration à roue de tamisage (100) selon la revendication 1, **caractérisé en ce que** la longueur moyenne d'une région de surface de pression active arquée (44) vaut de 1,9 fois à 2,5 fois la largeur.

3. Dispositif de filtration à roue de tamisage (100) selon la revendication 1 ou 2, **caractérisé en ce que** l'épaisseur du bloc d'entrée (11) et du bloc de sortie (12) vaut respectivement au moins 2,5 fois à 3,5 fois le diamètre du boulon de serrage (19.1).

4. Dispositif de filtration à roue de tamisage (100) selon l'une quelconque des revendications 1 à 3, **caractérisé**
- **en ce qu'**au moins un alésage de détente pression (41) est prévu dans la plaque d'entrée (11) et/ou dans la plaque de sortie (12), lequel débouche dans la voie balayée par les emplacements de tamisage (22.1, **...,** 22.13) lors de la rotation de la roue de tamisage (20) et lequel est relié fluidiquement à un côté extérieur du boîtier (10) par le biais d'un canal de détente de pression (41.1), et
- **en ce que** lors d'un recouvrement d'un emplacement de tamisage (22.1 **...** 22.13) par au moins un alésage de détente de pression (41) aucun recouvrement de l'emplacement de tamisage (22.1 **...** 22.13) par la région d'écoulement (40) n'existe.

5. Dispositif de filtration à roue de tamisage (100) selon la revendication 4, **caractérisé en ce qu'**au moins un trajet tangentiel d'écoulement de détente de pression est formé à l'intérieur d'au moins un interstice de lubrification, lequel trajet s'étend entre l'une des embouchures (13.1, 14.1) du canal d'entrée (13) ou du canal de sortie (14) et au moins un alésage de détente de pression (41) débouchant en amont de la région d'écoulement (40) dans le sens de rotation.

6. Dispositif de filtration à roue de tamisage (100) selon la revendication 5, **caractérisé en ce que** la distance entre l'embouchure de l'alésage de détente de pression (41) et le bord avant respectif de la région d'écoulement (40) dans le sens de rotation est supérieure à l'étendue maximale des emplacements de tamisage (22.1, ..., 22.13) dans le sens de rotation.

7. Dispositif de filtration à roue de tamisage (100) selon l'une quelconque des revendications 1 à 6, **caractérisé en ce qu'**au moins un trajet radial d'écoulement de détente de pression est formé à l'intérieur d'au moins un interstice de lubrification, lequel trajet s'étend entre la région d'écoulement (40) et au moins un alésage de détente de pression (42), lequel est prévu dans la plaque d'entrée (11) et/ou dans la plaque de sortie (12), l'alésage de détente de pression (42) débouchant au niveau de la bague de palier (18) et étant relié fluidiquement à un côté extérieur du boîtier (10) par le biais d'un canal de détente de pression (42.1) formé dans le boîtier (10).

8. Dispositif de filtration à roue de tamisage (100) selon la revendication 7, **caractérisé en ce qu'**un canal annulaire (43) est formé dans la roue de tamisage (20) et/ou dans le boîtier (10), lequel canal est en liaison d'écoulement par rapport à un palier lisse (26) annulaire formé entre la bague de palier (18) et la roue de tamisage (20).

9. Dispositif de filtration à roue de tamisage (100) selon la revendication 8, **caractérisé en ce que** le canal annulaire (43) est formé dans la roue de tamisage (20) par un chanfrein respectif sur la périphérie extérieure de la bague de palier (18) et sur la périphérie intérieure de l'alésage recevant la bague de palier (18).

10. Dispositif de filtration à roue de tamisage (100) selon l'une quelconque des revendications précédentes, **caractérisé en ce que** la surface de section transversale A2 de la bague de palier (18) vaut au maximum 13 fois la surface de section transversale A1 du boulon de serrage (19).
